**Europäisches Patentamt**

**European Patent Office**

**Office européen des brevets**

(19)

(11) Numéro de publication : **0 133 069**
**B1**

(12) # FASCICULE DE BREVET EUROPÉEN

(45) Date de publication du fascicule du brevet :
04.05.88

(21) Numéro de dépôt : **84401346.6**

(22) Date de dépôt : **26.06.84**

(51) Int. Cl.⁴ : **G 01 F 23/00**, F 01 M 11/12

(54) **Dispositif de jaugeage de niveau d'huile notamment pour boîte de vitesses automatique.**

(30) Priorité : 08.07.83 FR 8311408

(43) Date de publication de la demande :
**13.02.85 Bulletin 85/07**

(45) Mention de la délivrance du brevet :
**04.05.88 Bulletin 88/18**

(84) Etats contractants désignés :
**BE DE GB IT SE**

(56) Documents cités :
**DE-A- 2 904 145**
**US-A- 4 306 525**
**US-A- 4 356 480**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Leorat, François**
**Boulevard de la Reine**
**F-78000 Versailles (FR)**

(74) Mandataire : **Chassagnon, Jean-Alain et al**
**REGIE NATIONALE DES USINES RENAULT (S.0804)**
**F-92109 Boulogne-Billancourt Cedex (FR)**

Jouve, 18, rue St-Denis, 75001 Paris, France

## Description

La présente invention se rapporte à un dispositif de jaugeage de niveau d'huile pour boîte de vitesses automatique équipant un véhicule automobile et comprenant un système de capteur de niveau d'huile piloté par un dispositif de commande.

Le jaugeage du niveau d'huile dans une transmission automatique à organe de couplage hydro-cinétique est un problème important et difficile à résoudre.

Ce problème est important, car un niveau d'huile trop bas peut entraîner des dommages irréversibles à la transmission (grillage d'organe de commutation au démarrage notamment), de même qu'un niveau d'huile trop élevé induit un barbotage intensif, générateur de perte de rendement importante et de température de fonctionnement prohibitive.

Ce problème est difficile, car le niveau d'huile apparent varie fortement en fonction de la température et selon que le moteur tourne au ralenti ou non. En effet, l'huile de transmission automatique possède un coefficient de dilatation élevé, le volume d'huile nécessaire au fonctionnement de la transmission est relativement important, et la surface libre qui permet le jaugeage est le plus souvent très restreinte, tous phénomènes se conjuguant pour entraîner une forte variation de niveau en fonction de la température, à masse d'huile constante dans la transmission.

De plus, le niveau de la surface libre est très sensible à l'état de remplissage du convertisseur dont on ne peut garantir qu'il est complètement plein qu'après qu'il ait été entraîné pendant un temps suffisant par le moteur du véhicule, ce qui oblige en fait à pratiquer les mesures de niveau en position « Neutre » ou « Parking » moteur tournant.

Dans la plupart des cas, le système de contrôle de niveau couramment monté sur une boîte de vitesses automatique reste rudimentaire et se résume à une jauge manuelle, simple tige dont l'extrémité trempe dans l'huile, la longueur mouillée de la tige indiquant le niveau apparent de l'huile. Mais sachant que le niveau minimal à chaud peut être très supérieur au niveau maximal à froid, la lecture de la jauge exige une interprétation qui n'est pas à la portée du conducteur moyen ni même du personnel d'entretien courant. De plus, la difficulté matérielle de lecture de la jauge due à la faible viscosité des fluides de transmission automatique fait que, toutes causes cumulées, la quantité d'huile en circulation dans une transmission automatique est rarement correcte. Ce dernier fait engendre des désordres soit brutaux (destruction d'organes de commutation par manque d'huile), soit plus insidieux (échauffement par excès d'huile).

Des systèmes de jaugeage pneumatiques, permettant d'évaluer directement le volume d'huile dans la boîte par mesures de pression, ont été proposés, mais ils sont coûteux et leur mise en œuvre est délicate dans la mesure où elle présuppose une excellente étanchéité à l'air de la transmission complète, ce qui est problématique (reniflard).

La présente invention se propose de résoudre le problème du contrôle du niveau d'huile dans une transmission automatique en adaptant une technique connue en soi (fil chaud par exemple) aux problèmes spécifiques posés par la boîte de vitesses automatique, de manière à ce que l'utilisateur d'un véhicule équipé d'une telle transmission puisse disposer à volonté d'une indication dénuée d'ambiguïté d'interprétation et fiable du niveau d'huile au moyen d'une télémesure dont la procédure prend en compte les particularités de l'évolution du niveau d'huile dans une transmission automatique.

L'invention consiste à insérer, dans le circuit de traitement connu en soi du signal d'un capteur de niveau, un circuit correcteur prenant en compte l'évolution du niveau d'huile en fonction de la température et à lui associer des dispositifs de commande particuliers permettant, d'une part d'automatiser complètement la procédure manuelle actuelle de jaugeage de niveau, d'autre part d'offrir des prestations nouvelles inaccessibles aux techniques traditionnelles.

A cet effet, l'invention a pour objet un dispositif de jaugeage de niveau d'huile tel que défini et caractérisé dans la revendication 1 pour boîte de vitesses automatique.

Selon un mode de réalisation de l'invention, le dispositif de jaugeage comporte un dispositif d'alarme comprenant deux relais à seuil, alimentés en parallèle par la sortie du circuit électronique correcteur, et mettant sous tension un témoin d'alarme.

Selon un mode de réalisation de l'invention, le dispositif de jaugeage comporte un dispositif de jaugeage du niveau d'huile du moteur, l'organe d'affichage permettant la lecture, au choix, d'une part de la mesure du niveau d'huile moteur signalée par un voyant, d'autre part de la mesure du niveau d'huile de boîte de vitesses automatique signalée par un voyant ; ledit dispositif de jaugeage du niveau d'huile du moteur comprenant une alimentation propre de l'électronique de traitement par un interrupteur lié aux contacts d'entrée, les interconnections propres à la mesure du niveau d'huile du moteur étant assurées par des interrupteurs à deux voies.

D'autres modes de réalisation de l'invention sont présentés par les revendications 4 à 6.

Les particularités de l'invention apparaîtront dans la description qui va suivre d'un de ses modes de réalisation pris comme exemple et représenté par les dessins annexés, sur lesquels :

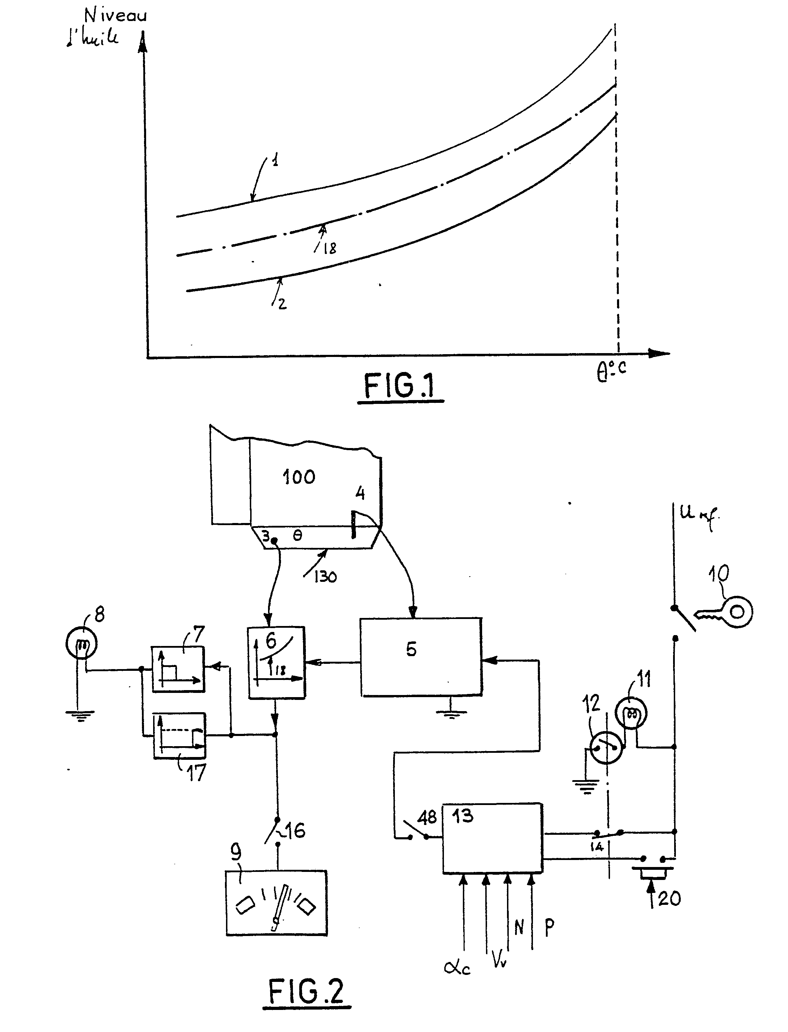

la figure 1 représente une courbe-type de variation des niveaux minimal et maximal d'huile admissibles dans une transmission automatique en fonction de la température ;

la figure 2 représente un mode préféré de réalisation de l'invention ;

la figure 3 représente le circuit logique de mise en œuvre du processus de mesure de niveau d'huile ;

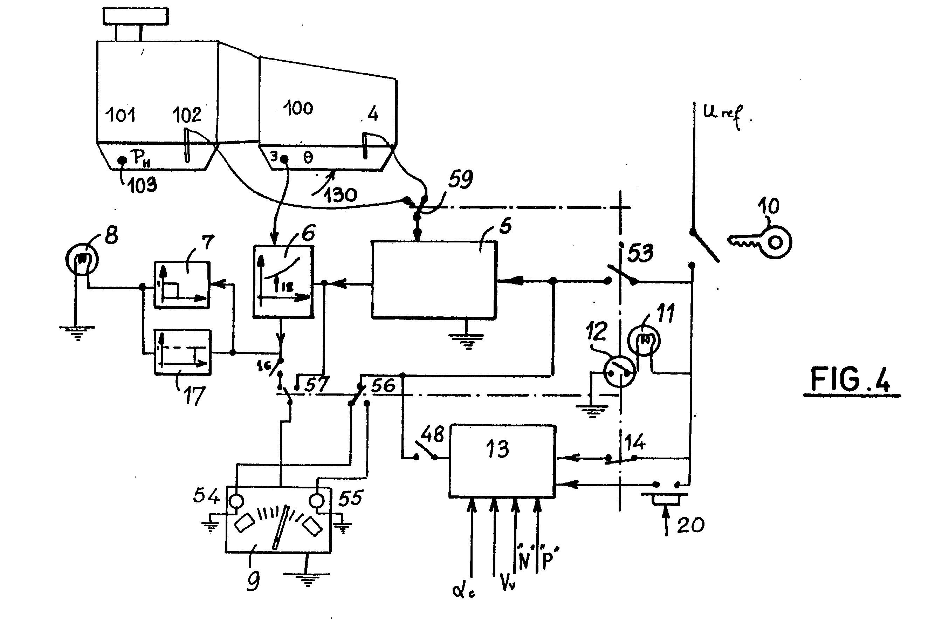

la figure 4 représente une variante de l'invention couplée avec le jaugeage du niveau d'huile moteur.

Les courbes 1 et 2, qui traduisent respectivement l'évolution en fonction de la température d'huile des niveaux maximal et minimal d'huile permettant d'assurer un fonctionnement correct de la transmission, sont en règle générale des courbes à caractère expérimental qui sont systématiquement à relever pour chaque type de transmission automatique ; leur connaissance précise conditionne la mise en œuvre de l'invention.

D'autre part, dans le carter d'huile 130 de la transmission automatique 100, sont disposés, d'une part une sonde de température 3, d'autre part un capteur de niveau 4. Le capteur de niveau 4 est relié à son circuit électronique de traitement 5, l'ensemble 4 et 5 étant connu en soi et similaire par exemple aux dispositifs montés en série sur certains véhicules pour jauger, à l'arrêt du moteur, le niveau d'huile dans ce dernier. Le signal de sortie du circuit 5 est envoyé sur un circuit électronique spécifique 6 qui reçoit également le signal émis par la sonde de température 3 ; le circuit électronique spécifique corrige, en fonction de la température d'huile, le signal de niveau émis par l'électronique de traitement (5), de telle manière que le signal de sortie soit indépendant de la température, pour une masse d'huile donnée dans la boîte de vitesses automatique. La sortie du circuit spécifique 6 attaque, par l'intermédiaire du contact 16, dont le mode d'actionnement sera précisé plus loin, un organe d'affichage 9 de niveau d'huile qui peut être, de manière non limitative, un galvanomètre ; en parallèle, la sortie du circuit spécifique 6 attaque deux relais à seuil 7 et 17 traduisant les limites inférieure et supérieure admissibles du niveau d'huile, et la sortie commune des deux relais à seuil 7 et 17 alimente un témoin d'alarme 8.

La mise en action des circuits 5 et 6 est commandée par un second circuit spécifique de commande 13 qui reçoit des informations sur la position de la pédale d'accélérateur, la vitesse du véhicule, le sélecteur de vitesse, et le manocontact de pression d'huile du moteur.

Plus précisément, le témoin 11 (commandé par le contact 12) du manocontact 103 de pression d'huile moteur est alimenté à partir de la tension de la batterie établie par la clé de contact 10, et un contact 14 (normalement fermé) du manocontact 103 alimente le boîtier 13 lorsque le voyant 11 est éteint, c'est-à-dire moteur tournant avec pression d'huile établie.

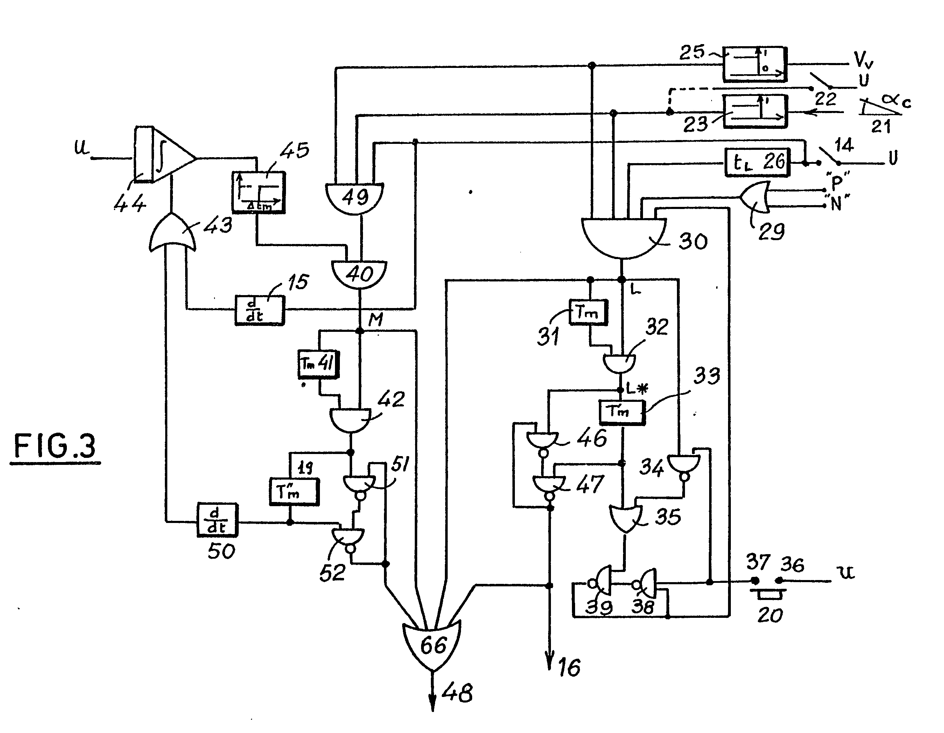

D'autre part, la position de l'organe de dosage en carburant (papillon pour les moteurs à essence, levier de commande pour les pompes à injection Diesel), repérée sur la figure 3 par un détecteur 21, est envoyée sur un amplificateur à seuil 23 qui délivre une tension de niveau logique 1 lorsque l'organe de dosage en carburant est en position « pied levé » (l'ensemble 21-23 pouvant être remplacé par un contacteur de pied levé 22).

De même, un signal analogique image de la vitesse du véhicule est envoyé sur un ampli à seuil 25 qui délivre une tension de niveau logique 1 lorsque la vitesse du véhicule est sensiblement nulle. Les sorties des deux amplis à seuil 23 et 25 alimentent deux des entrées d'un circuit ET 49. Par ailleurs, le contact 14 commandé par le contact 12 alimente une temporisation 26 dont la sortie alimente la troisième entrée du circuit ET 30 et dont la valeur $t_L$ est telle qu'on est sûr qu'elle soit supérieure au temps nécessaire au remplissage du convertisseur après un arrêt prolongé du moteur.

Enfin, les deux entrées 27 et 28 d'un circuit OU 29 reçoivent des signaux logiques de niveau 1 indiquant que le sélecteur de vitesse est soit en position « P », soit en position « N » respectivement. Les sorties des circuits ET 39 et OU 29 sont connectées aux entrées d'un premier circuit ET 30, dont la sortie attaque l'une des entrées des circuits ET 32, OU 66 et NI 34, et enfin une temporisation 31 dont la valeur Tm correspond à un temps suffisamment long d'apparition de la valeur logique 1 en sortie du circuit ET 30. La sortie de la temporisation 31 est connectée à la seconde entrée du circuit ET 32.

L'apparition du niveau logique 1 sur la sortie du circuit ET 32, mémorisé sur la sortie du circuit NI 47, provoque la fermeture du contact 16 sur la ligne d'alimentation de l'organe d'affichage 9 ; par ailleurs, la sortie du circuit ET 32 alimente d'une part une temporisation 33 T'm qui correspond à la durée d'affichage sur l'organe d'affichage 9 de la lecture de niveau d'huile, d'autre part une mémoire constituée par deux circuits NI 46 et NI 47, dont la sortie est reliée à la deuxième entrée du circuit OU 66 et dont la remise à zéro est assurée par l'apparition du niveau logique 1 sur la sortie de la temporisation 33. La sortie du circuit OU 66 actionne l'interrupteur 48, ouvert au repos.

Enfin, un bouton-poussoir 20, à la disposition du conducteur, et dont la borne d'entrée 36 est reliée à la tension de référence U réf, alimente une première mémoire constituée par les circuits 38 et 39, dont la remise à zéro est effectuée par l'apparition du niveau logique 1 sur la sortie du circuit OU 35, dont les deux entrées sont respectivement la sortie de la temporisation 33 et la sortie du circuit NI 34. Ce premier reçoit comme entrées, d'une part la sortie du premier circuit ET 30, et d'autre part la tension apparaissant sur la borne de sortie 37 de l'interrupteur 20. Enfin, la sortie de la première mémoire 38-39 est connectée à la dernière entrée du premier circuit ET 30.

La partie du circuit spécifique 13 qui vient d'être décrite correspond à la mise en œuvre de la lecture affichée sur l'organe d'affichage 9 du niveau d'huile dans la transmission, par action volontaire du conducteur sur le bouton-poussoir 20.

La seconde partie du circuit 13 autorise une lecture périodique mais non affichée du niveau d'huile, entraînant l'apparition d'un signal d'alarme en cas de détection d'un niveau incorrect. Pour ce faire, la sortie du circuit ET 49 est envoyée dans le troisième circuit ET 40. La sortie du troisième circuit ET 40 alimente en parallèle une temporisation 41 dont la fonction est analogue à celle de la temporisation 31, et un circuit ET 42 dont la seconde entrée est connectée à la sortie de la temporisation 41. La sortie du circuit ET 42, mémorisée dans la mémoire constituée par les circuits NI 51 et 52, actionne le contact 48 par l'intermédiaire du circuit OU 66. La mémoire 51-52 est remise à zéro par la sortie de la temporisation 19 qui détermine la durée T″m d'affichage de l'alarme.

Par ailleurs, la tension de référence alimente un intégrateur 44 dont la sortie est par conséquent représentative du temps écoulé. La remise à zéro et le démarrage de l'intégrateur 44 sont simultanément commandés par le circuit OU 43 dont les entrées sont respectivement les sorties des circuits différentiateurs 15 et 50 opérant respectivement sur les sorties du contact 14 et de la temporisation 19. La sortie de l'intégrateur 44 alimente un relais à seuil 45 dont le déclenchement s'opère lorsque la tension de sortie de l'intégrateur 44 a atteint une valeur $\Delta Tm$ choisie au moins égale à $t_L$ mais inférieure à la tension de saturation de l'intégrateur 44 et correspondant à la périodicité minimale de scrutation du niveau d'huile ; la sortie du relais à seuil 45 est reliée par ailleurs à la deuxième entrée du troisième circuit ET 40.

Le processus d'une mesure suivie d'affichage du niveau d'huile demandée par le conducteur est le suivant :

Le conducteur appuie sur l'interrupteur 20, sa demande est mise en mémoire dans la mémoire 38-39 ;

si $\alpha_c = 0$, $V_v = 0$, si le sélecteur est sur « P » ou « N », et si le contact 14 est fermé depuis un temps supérieur à $t_L$, c'est-à-dire si le moteur a tourné un temps suffisant pour que le convertisseur ait eu le temps de se remplir, le premier circuit 30 délivre l'ordre par l'intermédiaire du contact 48 de mise sous tension du circuit de mesure ; si l'ordre L subsiste un temps supérieur à Tm, le deuxième circuit ET 32 délivre l'ordre L* d'affichage, qui est mis en mémoire dans les deux circuits NI 46 et 47 de manière à permettre une lecture pendant une durée T'm, même si le signal L disparaît pendant la durée d'affichage T'm. A l'issue de la durée d'affichage T'm, la deuxième mémoire 46-47 est désactivée et l'affichage disparaît en raison de l'ouverture du contact 16, et la première mémoire 38-39 est mise à zéro, coupant ainsi l'alimentation de l'électronique de traitement par l'ouverture du contact 48.

Toute action nouvelle sur le bouton-poussoir 20 est sans effet si elle a lieu avant que la fin de l'ensemble du cycle, marquée par l'apparition du niveau logique 1 sur la sortie de la temporisation 33, ne soit intervenue, puisque la sortie de la mémoire 39 ne peut être affectée par une action sur le bouton-poussoir 20 que si la remise à zéro de la première mémoire 38-39 a été excitée par la sortie du circuit OU 35. De plus, en cas d'anomalie de niveau, le témoin 8 s'allume.

Le processus d'une mesure automatique du niveau d'huile, suivie éventuellement de l'apparition d'un signal d'alarme sur le témoin 8, est le suivant :

si $\alpha_c = V_v = 0$, moteur tournant (contact 14 fermé), et au plus tôt à l'issue d'un temps $\Delta Tm$ après une précédente mesure, le signal M apparaît à la sortie du troisième circuit ET 40 et le processus de mesure est initialisé par la fermeture du contact 48 ;

si le signal M est présent pendant une durée au moins égale à Tm, la mesure de niveau est validée et, le cas échéant, le témoin 8 s'allume pendant une durée T″m.

A la fin de chaque cycle de mesure, l'intégrateur 44 est réinitialisé à l'expiration de T″m, si bien que la mesure suivante ne peut avoir lieu au plus tôt que $\Delta Tm$ après la précédente, que le témoin 8 se soit allumé ou non.

La description de l'invention qui précède ne se rapporte qu'à un mode de réalisation préféré mais de nombreuses variantes sont possibles notamment au niveau des modalités d'affichage.

En particulier, il est possible de jumeler le système actuel connu en soi de jaugeage du niveau d'huile du moteur (moteur à l'arrêt) avec l'invention précédemment décrite, de manière à ce que le circuit de traitement 5 et l'organe d'affichage 9 soient communs aux deux fonctions, ce qui est avantageux tant du point de vue du coût que du point de vue de la facilité d'implantation des organes au tableau de bord.

De manière connue en soi, l'alimentation du circuit de traitement 5 est assurée, pour la lecture du niveau d'huile moteur, par le contact 53 lié au manocontact 103 (l'alimentation du circuit 5 est ainsi coupée quand s'éteint le voyant 11 du manocontact), le circuit 5 étant par conséquent alimenté en parallèle avec le contact 48 précédemment décrit.

L'organe d'affichage 9 est modifié de telle manière à inclure deux voyants 54 et 55, alimentés respectivement par l'interrupteur à deux voies 56 : l'interrupteur 56 est lié au manocontact de telle sorte que le voyant 55 est alimenté lorsque le voyant de pression d'huile moteur 11 est alimenté. Les voyants 54 et 55 indiquent donc que c'est respectivement le niveau d'huile transmission ou le niveau d'huile moteur qui est affiché sur l'organe d'affichage 9.

Les interrupteurs à deux voies 57 et 59 sont liés au manocontact de telle manière que ce sont le capteur de niveau d'huile moteur 102 et la sortie du circuit spécifique 5 qui sont respectivement reliés au circuit de traitement 5 et à l'organe d'affichage 9 lorsque le témoin 11 est allumé, et le capteur 4 et la sortie du circuit spécifique 6 qui sont reliés respectivement au circuit 5 et à l'organe 9 lorsque le témoin 11 est éteint.

Enfin, on notera que la mise sous tension du voyant 8 peut, dans tous les cas, s'accompagner de la mise en service d'un système d'alarme par synthèse de la parole signalant, par un message approprié, l'anomalie de niveau d'huile et la nécessité de procéder à une mesure en appuyant, dans les conditions requises, sur le bouton 20.

**Revendications**

1. Dispositif de jaugeage de niveau d'huile pour boîte de vitesses automatique équipant un véhicule automobile et comprenant un capteur de niveau (4) relié à une électronique de traitement (5) est branchée sur un circuit d'alimentation en énergie muni d'une clé de contact (10) et d'un premier contact (14) commandé par un deuxième contact (12) du témoin (11) du manocontact (103) de pression d'huile du moteur, caractérisé en ce qu'il comporte :

un circuit spécifique de commande (13) de l'électronique de traitement (5), l'alimentation de cette dernière étant assurée par un troisième contact (48) commandé par ledit circuit spécifique de commande (13) ; un quatrième contact (16), commandé par ladite électronique de traitement (5) et relié au circuit d'alimentation d'un organe d'affichage (9) dudit niveau d'huile ; lequel circuit spécifique de commande (13) reçoit les informations charge moteur $\alpha_c$, vitesse véhicule $V_v$, positions du sélecteur « Neutre » et « Parking » de ladite boîte de vitesses, alimentation en énergie par le premier contact (14) et action volontaire du conducteur par bouton-poussoir (20) pour demander l'affichage du niveau d'huile de la boîte ;

un circuit électronique spécifique (6) corrigeant, par association à une sonde de température (3), la valeur du signal de niveau émis par l'électronique de traitement (5) et transmis à l'organe d'affichage (9).

2. Dispositif de jaugeage selon la revendication 1, caractérisé en ce qu'il comporte un dispositif d'alarme comprenant deux premiers relais à seuil (7 et 17), alimentés en parallèle par la sortie du circuit électronique spécifique (6), et mettant sous tension un témoin d'alarme (8).

3. Dispositif de jaugeage selon l'une des revendications 1 ou 2, caractérisé en ce qu'il comporte un dispositif de jaugeage du niveau d'huile du moteur, l'organe d'affichage (9) permettant, au choix, d'une part la mesure du niveau d'huile moteur signalée par un premier voyant (55), d'autre part la mesure du niveau d'huile de boîte de vitesses automatique signalée par un second voyant (54) ; ledit dispositif de jaugeage du niveau d'huile du moteur comprenant une alimentation propre de l'électronique de traitement (5) par un interrupteur (53) commandé simultanément avec les premier (14) et deuxième (12) contacts, les interconnections propres à la mesure du niveau d'huile du moteur étant assurées par des interrupteurs à deux voies (56, 57 et 59).

4. Procédé de jaugeage selon l'une des revendications 1 ou 3, caractérisé en ce que :

un ordre donné par le bouton-poussoir (20) est stocké dans une première mémoire (38-39), et envoyé à l'entrée du circuit spécifique de commande (13) ;

si les informations charge moteur $\alpha_c = 0$ et vitesse véhicule $V_v = 0$ sont présentes, si le sélecteur est sur « Neutre » ou « Parking », si le premier contact (14) est fermé depuis un temps $\geqslant t_L'$, un premier circuit (30) délivre un ordre L de fermeture du troisième contact (48) ;

si l'ordre L subsiste pendant un temps $\geqslant$ Tm, la mesure est affichée sur l'organe d'affichage (9) pendant un temps T'm au moyen d'un deuxième circuit (32) qui délivre un ordre L* d'affichage qui est stocké dans une deuxième mémoire (46-47) et qui est exécuté par la fermeture du quatrième contact (16) ;

à la fin du temps T'm l'affichage disparaît au moyen de l'ouverture du quatrième contact (16), par la remise à zéro de la deuxième mémoire (46-47) ; l'alimentation de l'électronique du traitement (5) est coupée via l'ouverture du troisième contact (48), par la remise à zéro de la première mémoire (38-39).

5. Procédé de jaugeage selon l'une des revendications 2 ou 3, caractérisé en ce que :

si les informations charge moteur $\alpha_c = 0$ et vitesse véhicule $V_v = 0$ sont présentes, si le premier contact (14) est fermé et si il s'est écoulé au moins un temps $\Delta$Tm depuis la précédente mesure, le circuit de mesure de niveau d'huile de boîte est mis sous tension au moyen d'un troisième circuit (40) qui délivre un ordre M de fermeture du troisième contact (48) ;

si l'ordre M subsiste pendant un temps $\geqslant$ Tm, la mesure de niveau est validée et envoyée dans les premiers relais à seuil (7, 17) ;

si la mesure de niveau est telle qu'elle actionne l'un des premiers relais à seuil (7, 17), le témoin d'alarme (8) s'allume pendant un temps T''m ;

à la fin du temps T''m, le troisième circuit (40) n'est autorisé à fonctionner à nouveau qu'après, au minimum, un temps $\Delta$Tm, au moyen d'un intégrateur (44) agissant sur l'entrée d'un second relais à seuil (45), que le témoin d'alarme (8) se soit allumé ou non.

6. Dispositif de jaugeage selon l'une quelconque des revendications précédentes, caractérisé en ce que le circuit électronique spécifique (6) corrige, en fonction de la température d'huile de boîte de vitesses automatique, le signal de niveau de l'huile de boîte émis par l'électronique de traitement (5), de telle manière que le signal de sortie de ce circuit (6) soit indépendant de la température pour une masse d'huile donnée dans la boîte de vitesses automatique.

**Claims**

1. An oil level gauging device for an automatic gearbox on a motor vehicle and comprising a level detector (4) connected to an electronic processing means (5) connected to a power supply circuit provided with a switch key (10) and a first switch (14) which is controlled by a second switch (12) of the telltale (11) of the engine oil pressure switch (103) characterised in that it comprises :

a specific control circuit (13) for the electronic processing means (5), the feed for the latter being provided by a third switch (48) controlled by said specific control circuit (13) ; a fourth switch (16) which is controlled by said electronic processing means (5) and which is connected to the circuit for supplying a member (9) for displaying said oil level ; said specific control circuit (13) receives the information in respect of engine load $\alpha_c$, vehicle speed $V_v$, positions of the selector in « Neutral » and « Parking » of said gearbox, power supply by the first switch (14) and voluntary action on the part of the driver by a pushbutton (20) to call for display of the gearbox oil level ; and

a specific electronic circuit (6) which, by association with a temperature probe (3), corrects the value of the level signal emitted by the electronic processing means (5) and transmitted to the display member (9).

2. A device according to claim 1 characterised in that it comprises a warning device comprising two first threshold relays (7 and 17) which are supplied in parallel by the output of the specific electronic circuit (6) and applying voltage to a warning telltale (8).

3. A device according to one of claims 1 and 2 characterised in that it comprises a means for gauging the level of oil in the engine, the display member (9) selectively permitting on the one hand measurement of the level of oil in the engine as signalled by a first indicator (55) and on the other hand measurement of the level of oil in the automatic gearbox as signalled by a second indicator (54) ; said engine oil level gauging means comprising its own feed in respect of the electronic processing means (5) by way of a switch (53) which is controlled simultaneously with the first and second switches (14 and 12), the interconnections for measuring the engine oil level being provided by two-way switches (56, 57 and 59).

4. A gauging process according to one of claims 1 or 3 characterised in that :

an order given by the pushbutton (20) is stored in a first memory (38-39) and passed to the input of the specific control circuit (13) ;

if the information in respect of engine load $\alpha_c = 0$ and vehicle speed $V_v = 0$ are present, if the selector is at « Neutral » or « Parking », if the first switch (14) has been closed for a time $\geqslant t_1$, a first circuit (30) delivers an order L for closure of the third switch (48) ;

if the order L persists for a time $\geqslant Tm$, the measurement is displayed on the display member (9) for a time $T'_m$ by means of a second circuit (32) which delivers a display order L* which is stored in a second memory (46-47) and which is executed by closure of the fourth switch (16) ;

at the end of the time $T'_m$ the display disappears by means of the opening of the fourth switch (16), by resetting to zero of the second memory (46-47) ; the feed of the electronic processing means (5) is cut off by way of opening of the third switch (48), by resetting of the first memory (38-39).

5. A gauging process according to one of claims 2 or 3 characterised in that :

if the information in respect of engine load $\alpha_c = 0$ and vehicle speed $V_v = 0$ are present, if the first switch (14) is closed and if at least a time $\Delta Tm$ has elapsed since the preceding measurement, the gearbox oil level measuring circuit is put under voltage by means of a third circuit (40) which delivers an order M for closure of the third switch (48) ;

if the order M persists for a time $\geqslant Tm$, the level measurement is validated and passed to the first threshold relays (7, 17) ;

if the level measurement is such that it actuates one of the first threshold relays (7, 17), the warning telltale (8) is lit for a time $T''m$ ; and

at the end of the time $T''m$, the third circuit (40) is authorised to operate again only after, at a minimum, at time $\Delta Tm$, by means of an integrator (44) acting on the input of a second threshold relay (45), whether the warning telltale (8) is lit or not.

6. A gauging device according to any one of the preceding claims characterised in that the specific electronic circuit (6) corrects, in dependence on the automatic gearbox oil temperature, the gearbox oil level signal emitted by the electronic processing means (5) in such a way that the output signal of said circuit (6) is independent of the temperature for a given mass of oil in the automatic gearbox.

**Patentansprüche**

1. Ölstandsmeßeinrichtung für das automatische Getriebegehäuse eines Kraftfahrzeuges mit einem Ölstandsfühler (4), der mit einer elektronischen Auswerteschaltung (5) verbunden ist, die an eine Energieversorgungsschaltung angeschlossen ist, die mit einem Zündschlüssel (10) und einem ersten Schalter (14) versehen ist, der vor einem zweiten Schalter (12) eines Anzeigers (11) für den Öldruckschalter (103) des Motors gesteuert wird, dadurch gekennzeichnet, daß sie aufweist :

eine spezifische Steuerschaltung (13) für die Auswerteschaltung (5), deren Versorgung durch einen dritten Schalter (48) gewährleistet wird, der von dieser spezifischen Steuerschaltung (13) gesteuert wird ; einen vierten Schalter (16), der von dieser Auswerteschaltung (5) gesteuert wird und mit dem Versorgungsschaltkreis einer Anzeigevorrichtung (9) für den Ölstand verbunden ist ; der spezifische Steuerschaltkreis (13) erhält Informationen über Motorlast ($\alpha_c$), Fahrzeuggeschwindigkeit ($V_v$), Stellungen des Getriebewahlhebels « neutral » und « parken », Energieversorgung durch den ersten Schalter (14) und freiwilliges Betätigen eines Druckknopfes (20) durch den Fahrer zur Anzeige des Ölstands im Getriebe ;

einen spezifischen elektronischen Schaltkreis (6), der im Zusammenwirken mit einem Temperaturfühler (3) den Wert des Ölstandsignals korrigert, das von der Auswerteschaltung (5) abgegeben und der Anzeigevorrichtung (9) zugeführt wird.

2. Ölstandsmeßeinrichtung nach Anspruch 1, dadurch gekennzeichnet, daß sie eine Alarmanordnung enthält, die zwei erste Schwellwert-Relais (7 und 17) aufweist, die vom Ausgang des spezifischen elektronischen Schaltkreises (6) parallel gespeist werden und einen Alarmanzeiger (8) mit Spannung beaufschlagen.

3. Ölstandsmeßeinrichtung nach einem der Ansprüche 1 oder 2, dadurch gekennzeichnet, daß sie eine Ölstandsmeßeinrichtung für den Motor aufweist, wobei die Anzeigevorrichtung (9) wahlweise einerseits das Meßergebnis des Motorölstands mittels einer ersten Anzeige (55) signalisiert und andererseits das Meßergebnis des Ölstands des automatischen Getriebes mittels einer zweiten Anzeige (54) signalisiert ; die Ölstandsmeßeinrichtung für das Motoröl weist eine eigene Versorgung der elektronischen Auswerteschaltung (5) über einen Unterbrecher (53) auf, der gleichzeitig mit den ersten und zweiten Schaltern (14 bzw. 12) gesteuert wird, wobei die für die Messung des Ölstands des Motors erforderlichen Verbindungen durch Zweiwege-Unterbrecher (56, 57 und 59) dargestellt sind.

4. Verfahren zur Ölstandsmessung nach einem der Ansprüche 1 oder 3, dadurch gekennzeichnet, daß :

ein vom Druckknopf (20) stammender Befehl in einem ersten Speicher (38-39) gespeichert wird und dem Eingang einer spezifischen Steuerschaltung (13) zugeführt wird ;

wenn die Informationen über die Motorlast $\alpha_c = 0$ und Fahrzeuggeschwindigkeit $V_v = 0$ vorliegen, wenn der Wahlhebel auf « neutral » oder « parken » steht, wenn der erste Schalter (14) seit einer Zeit $\geqslant t_L$ geschlossen ist, erzeugt ein erster Schaltkreis (30) einen Befehl L zum Schließen des dritten Schalters (48) ;

wenn der Befehl L während einer Zeit $\geqslant Tm$ ansteht, wird das Meßergebnis an der Anzeigevorrichtung (9) während einer Zeit $T'_m$ angezeigt mittels eines zweiten Schaltkreises (32), der einen Anzeigebefehl L* liefert, der in einem zweiten Speicher (46-47) gespeichert wird und der durch Schließen des vierten Schalters (16) ausgeführt wird ;

am Ende des Zeitraums $T'_m$ verschwindet die Anzeige durch das Öffnen des vierten Schalters (16) durch das Zurückstellen auf Null des zweiten Speichers (46-47) ; die Versorgung der elektronischen Auswerteschaltung (5) wird durch das Öffnen des dritten Schalters (48) unterbrochen und durch das Zurückstellen auf Null des ersten Speichers (38-39) ;

5. Verfahren zur Ölstandsmessung nach einem der Ansprüche 2 oder 3, dadurch gekennzeichnet, daß

wenn die Informationen über die Motorlast $\alpha_c = 0$ und Fahrzeuggeschwindigkeit $V_v = 0$ vorliegen, wenn der erste Schalter (14) geschlossen ist und wenn wenigstens eine Zeit $\Delta Tm$ seit der vorhergehenden Messung vergangen ist, wird die Meßschaltung für die Ölstandsmessung des Gehäuses mittels eines dritten Schaltkreises (40) mit Spannung beaufschlagt, die einen Befehl M zum Schließen des dritten Schalters (48) abgibt ;

wenn der Befehl M während einer Zeit $\geqslant Tm$ ansteht, wird das Meßergebnis für den Ölstand anerkannt und dem ersten Schwellwert-Relais (17, 47) zugeführt ;

wenn das Meßergebnis des Ölstands derartig ist, daß es eines der ersten Schwellwert-Relais (7, 17) betätigt, leuchtet die Alarmanzeige (8) während einer Zeit $T''m$ auf ;

am Ende der Zeit $T''m$ wird der dritte Schaltkreis. (40) erneut erst dann eingeschaltet, wenn wenigstens eine Zeit $\Delta Tm$ vergangen ist, mittels eines Integrators (44), der auf den Eingang eines zweiten Schwellwert-Relais (45) wirkt, wenn die Alarmanzeige (8) eingeschaltet ist oder nicht.

6. Ölstandsmeßeinrichtung nach einem der vorhergehenden Ansprüche, dadurch gekennzeichnet, daß der spezifische elektronische Schaltkreis (6) das Ölstandsmeßsignal für das Getriebeöl, das von der elektronischen Auswerteschaltung (5) stammt, als Funktion der Temperatur des Öls im automatischen Getriebe derart korrigiert, daß das Ausgangssignal des Schaltkreises (6) unabhängig von der Temperatur ist für eine vorgegebene Ölmenge im automatischen Getriebegehäuse.

FIG.1

FIG.2

FIG.3

FIG.4

0 133 069